(19) Europäisches Patentamt

European Patent Office

Office européen des brevets

(11) **EP 1 143 736 A2**

(12) **EUROPEAN PATENT APPLICATION**

(43) Date of publication:
**10.10.2001 Bulletin 2001/41**

(51) Int Cl.[7]: **H04N 7/26**, H04N 7/50

(21) Application number: **01302761.0**

(22) Date of filing: **26.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.03.2000 JP 2000090771**
**06.07.2000 JP 2000205115**

(71) Applicant: **SONY CORPORATION**
**Tokyo 141 (JP)**

(72) Inventors:
• **Hashimoto, Yasuhiro**
**Shinagawa-ku, Tokyo 141 (JP)**
• **Takashima, Masatoshi**
**Shinagawa-ku, Tokyo 141 (JP)**
• **Narita, Hideyuki**
**Shinagawa-ku, Tokyo 141 (JP)**
• **Hiranaka, Daisuke**
**Shinagawa-ku, Tokyo 141 (JP)**

(74) Representative: **DeVile, Jonathan Mark, Dr. et al**
**D. Young & Co**
**21 New Fetter Lane**
**London EC4A 1DA (GB)**

(54) **Image encoding apparatus and method and image decoding apparatus and method**

(57)    An image encoding apparatus and method for encoding an HDTV signal to a high quality of image by using a plurality of MPEG-2 MP@ML encoding devices by simple control, which divide an input image into four at an image division device, input the divided images to divided image encoding devices, set bit rates in the divided image encoding devices at an assigned bit rate processing unit based on generated code amounts of previous frames etc. so that the sum of bit rates of the four divided image encoding devices is constant, encode the divided images at the divided image encoding devices based on the set bit rates by MP@ML, and integrate the encoded images at a video stream integration device to create and output an MP@HL video stream, and apparatus and methods relating to the same.

FIG.1

**Description**

The present invention relates to image encoding apparatus and image decoding apparatus and methods for encoding and decoding images.

As a moving picture image encoding method, the MPEG-2 standard (ISO/IEC13818) has widely spread. The MPEG-2 introduces the concepts of a "profile" for mainly defining a classification of functions (difference of syntax) and a "level" for defining the difference of processing amounts such as image size and classifies supportable encoding performances. For example, the MP@ML (Main Profile at Main Level) is usually used for ITU-R601 images of 720 x 480 pixels and 60 fields/sec and the MP@HL (Main Profile at High Level) is usually used for HDTV images of 1920 x 1080 pixels and 60 fields/sec.

A very high speed processing is required for an apparatus for encoding or decoding a moving picture image signal having a frame structure with a large number of pixels such as a HDTV signal, that is, an apparatus for executing the encoding and decoding of for example MP@HL, so realization is difficult and the apparatus becomes very expensive. In comparison with this, an apparatus for MP@ML encoding and decoding is smaller in size and can operate at a lower speed in comparison with an MP@HL apparatus. Further, it has been already been made into an LSI and spread widely, so can be very cheaply obtained.

Therefore, in a moving picture image encoding/decoding apparatus disclosed in for example Japanese Unexamined Patent Publication (Kokai) No. 10-234043, a method of dividing a moving picture image signal of a frame structure having a large number of pixels such as an HDTV signal to a plurality of pictures, encoding or decoding signals of the divided pictures by MP@ML devices, and integrating the results of the processing to carry out MP@HL encoding or decoding has been proposed.

Summarizing the disadvantages to be solved by the invention, in the above moving picture image encoding apparatus disclosed in Japanese Unexamined Patent Publication (Kokai) No. 10-234043, the encoding is controlled so that amounts of codes created in the divided regions become uniform. For this reason, there is the disadvantage in that when there is a variation in the complexity of the images of the divided pictures, the amount of codes assigned to the picture of the complex image is not sufficient, so the quality of image is deteriorated.

In order to solve such a disadvantage, it is necessary to assign a suitable code amount to each of the plurality of MP@ML encoding devices by setting for example target bits for every frame, the maximum bits and the minimum bits, or other values. However, such control is complex. In addition, the processing must be executed in a very short time from when the encoding of a previous picture is ended and information such as the code amount is obtained to when the encoding of the next picture is started. It is therefore extremely difficult processing requiring high speed.

Further, in such a configuration, the maximum values of the amounts of codes created for each divided picture have to take into consideration the control value of the amount of codes for all of the pictures. Therefore, as a buffer of an input stage on the decoding side, it is necessary to provide a buffer having a capacity capable of buffering the codes of all of the pictures in the front of the MP@ML decoding device for every divided picture, so there arises a disadvantage such as an increase of the required capacity of the buffers.

Further, where one moving picture image signal is encoded by using a plurality of encoders in this way, as shown in for example Japanese Unexamined Patent Publication (Kokai) No. 11-252550, usually a single buffer has been used as a VBV buffer.

When it is desired to use a single VBV buffer, however, a controlling means for controlling the entire encoding apparatus will have an image of a single VBV buffer, obtain information of the amount of data stored in the buffer from each of the plurality of encoders, detect an occupancy rate of the buffer based on this, and further carry out rate control for each encoder based on this.

In this case as well, however, transfer and processing of this information must be carried out in a very short time after the end of the encoding of one picture and before the start of encoding of the next picture, so there is the disadvantage in that a very high capability of transferring and processing the information is required.

Note that, as a method of multiplexing bit streams encoded by variable bit rates by a plurality of encoders and transmitting them together as one bit stream of a constant bit rate, a method referred to as statistical multiplexing is known. Particularly a method for controlling the amount of data to be within the capacity of the transmission line and the encoder or decoder is disclosed in International Patent Publication W098/32252.

However, when dividing one moving picture image signal of for example the HDTV format, encoding each divided signal by an SDTV use encoder by a variable bit rate, and integrating the thus output plurality of bit streams to a single bit stream having a constant bit rate, the processing is different from statistical multiplexing, so the same procedure as statistic multiplexing cannot be applied.

Various aspects and features of the present invention are defined in the appended claims.

According to a first aspect of the present invention, there is provided an image encoding apparatus comprising a dividing means for dividing an input image signal to create N number of divided image signals a bit rate assigning means for assigning a bit rate for each of the created N number of divided image signals so that a sum of the bit rates of the created N number of divided image signals reaches a predetermined value an encoding means for encoding the created N number of divided image signals according to the assigned bit rates to create N number of video streams and an integrating means for integrating the created N number of video streams to one video stream.

Embodiments of the present invention relate to an image encoding apparatus for compressing and encoding a moving picture image signal, for example, a high definition television (HDTV) signal, and a method of same, an image decoding apparatus for decoding the encoded signal and a method of same, an image recording apparatus for recording the encoded signal, and an image transmitting apparatus for transmitting the encoded signal.

Embodiments of the present invention can provide an image encoding apparatus and an image encoding method capable of encoding a moving picture image signal having a large number of pixels such as an HDTV signal with a high quality of image and by simple control.

Embodiments of the present invention can also provide an image decoding apparatus and an image decoding method capable of decoding a moving picture image signal encoded in this way with a high quality of image by simple control, by using buffers of a small capacity, and at a low cost.

Embodiments of the present invention can also provide an image recording apparatus for recording a moving picture image signal encoded in this way.

Embodiments of the present invention can also provide an image transmitting apparatus for transmitting the thus encoded moving picture image signal.

Preferably, the encoding means has N number of encoding devices capable of operating in parallel for encoding the created N number of divided image signals according to the assigned bit rates to create the encoded video streams.

Further preferably, it has N number of buffers having predetermined capacities for storing the video streams created at the N number of encoding devices.

Further preferably, it has a buffer having a predetermined capacity for storing the video stream integrated by the integrating means.

Further preferably, each of the N number of encoding devices has a VBV (video buffering verifier) buffer, and the N number of encoding devices carry out the encoding based on occupancy rates of the VBV buffers.

Preferably, the N number of encoding devices find maximum values of generated bits that do not cause underflow at the VBV buffers when encoding the next picture based on the assigned bit rates and carry out the encoding within a range of the maximum values,

More preferably, each of the N number of encoding devices carries out the encoding within a range of a predetermined value sufficiently smaller than a maximum value of generated bits which does not cause underflow at its VBV buffer.

Specifically, each of the N number of encoding devices finds maximum generated bits "b" by the following equation (1) and carries out the encoding within the range of the maximum generated bits "b".

$$b = (a+c)/2 \qquad (1)$$

where,

"a" is a buffer occupancy rate increasing until immediately before the encoding of the next picture, and
"c" is the maximum value of the generated bits not causing the underflow of the VBV buffer.

Further preferably, it has a VBV buffer occupancy rate controlling means for adjusting the occupancy rates of the VBV buffers of the N number of encoding devices to intended states.

Further preferably, the VBV buffer occupancy rate controlling means adjusts the occupancy rates of the VBV buffers of the N number of encoding devices so that intermediate values of the occupancy rates of the VBV buffers at the time of output of the video streams of the pictures become equal in the VBV buffers of the N number of encoding devices.

Specifically, the input image signal may comprise an HDTV signal, and the N number of encoding devices may comprise SDTV signal encoding devices.

Further specifically, the bit rate assigning means finds a bit rate $R_{i,\,n+1}$ of an (n+1)th frame in an i-th (i = 1 to N) encoding device from the following equation (2) and assigns the same to the i-th the encoding device.

$$R_{i,\,n+1} = R \times X_{i,n}/\Sigma(X_{1,n} \text{ to } X_{N,n}) \qquad (2)$$

where,

$X_{i,n} = S_{i,n} \times Q_{i,n}$,

$S_{i,n}$ is the generated code bits of a frame n in the i-th encoding device,

$Q_{i,n}$ is a mean quantization scale code of the frame n in the i-th encoding device, and

R is a sum of the bit rates of the N number of divided image signals.

According to a second aspect of the present invention, there is provided an image encoding method comprising the steps of dividing an input image signal to create N number of divided image signals, assigning a bit rate for each of the created N number of divided image signals so that a sum of the bit rates of the created N number of divided image signals reaches a predetermined value, encoding the created N number of divided image signals according to the assigned bit rates to create N number of video streams, and integrating the created N number of video streams to one video stream.

According to a third aspect of the present invention, there is provided an image decoding apparatus comprising a demultiplexing means for receiving as input a video stream of a predetermined bit rate obtained by dividing a single image signal into N number of divided image signals, encoding them with variable bit rates, and integrating the created N number of video streams and for demultiplexing the input video stream to N number of video streams, a decoding means for decoding each of the demultiplexed N number of video streams to create N number of image signals, and a combining means for combining the created N number of image signals to one image signal.

According to a fourth aspect of the present invention, there is provided an image decoding method comprising the steps of receiving as input a video stream of a predetermined bit rate obtained by dividing a single image signal into N number of divided image signals, encoding them with variable bit rates, and integrating the created N number of video streams and for demultiplexing the related input video stream to N number of video streams, decoding each of the demultiplexed N number of video streams to create N number of image signals, and combining the created N number of image signals to one image signal.

According to a fifth aspect of the present invention, there is provided an image recording apparatus comprising a dividing means for dividing an input image signal to create N number of divided image signals, a bit rate assigning means for assigning a bit rate for each of the created N number of divided image signals so that the sum of the bit rates of the created N number of divided image signals reaches a predetermined value, an encoding means for encoding the created N number of divided image signals according to the assigned bit rates to create N number of video streams, an integrating means for integrating the created N number of video streams to one video stream, and a recording means for recording the integrated video stream on a recording medium.

According to a sixth aspect of the present invention, there is provided an image transmitting apparatus comprising a dividing means for dividing an input image signal to create N number of divided image signals, a bit rate assigning means for assigning a bit rate for each of the created N number of divided image signals so that the sum of the bit rates of the created N number of divided image signals reaches a predetermined value, an encoding means for encoding the created N number of divided image signals according to the assigned bit rates to create N number of video streams, an integrating means for integrating the created N number of video streams to one video stream, and a transmitting means for transmitting the integrated video stream.

The invention will now be described by way of example with reference to the accompanying drawings, throughout which like parts are referred to by like references, and in which:

Fig. 1 is a block diagram of the configuration of a moving picture image encoding apparatus of a first embodiment of the present invention;

Fig. 2 is a view for explaining an HDTV video signal input to the moving picture image encoding apparatus shown in Fig. 1 and a method of dividing the same;

Fig, 3 is a view for explaining an arrangement of a video stream broken down into units of slices;

Fig. 4 is a diagram of an example of the occupancy rate of data in buffers of four divided image encoding devices of the moving picture image encoding apparatus shown in Fig. 1;

Fig. 5 is a diagram of the occupancy rate of data of the sum of the buffers shown in Fig. 4;

Fig. 6 is a diagram of the state of transmission of a video stream integrated at a video stream integration device of the moving picture image encoding apparatus shown in Fig. 1 over a band of a predetermined transmission rate;

Fig. 7 is a block diagram of the configuration of a moving picture image decoding apparatus of a first embodiment of the present invention;

Fig. 8 is a block diagram of the configuration of a moving picture image decoding apparatus of a second embodiment of the present invention;

Fig. 9 is a block diagram of the configuration of a moving picture image decoding apparatus of a second embodiment of the present invention;

Fig. 10 is a block diagram of the configuration of a moving picture image decoding apparatus of a third embodiment of the present invention;

Fig. 11 is a block diagram of the configuration of a moving picture image decoding apparatus of a third embodiment of the present invention;

Fig. 12 is a diagram of the temporal relationship of processing of operations for input of an image, encoding, data transfer, and bit rate update;

Fig. 13 is a diagram for explaining a relationship between occupancy rate of a VBV buffer and the bit rate where a difficult and complex image is suddenly input to an encoding apparatus to which easy images had been continuously input before;

Fig. 14A is a diagram of the occupancy rate of a plurality of VBV buffers;

Fig. 14B is a diagram of the occupancy rate of individual VBV buffers;

Fig. 15 is a block diagram of the configuration of a moving picture image encoding apparatus of a fourth embodiment of the present invention;

Fig. 16 is a diagram for explaining a state of control of the occupancy rate of the VBV buffer in each divided image encoding device of the moving picture image encoding apparatus shown in Fig. 15; and

Fig. 17 is a diagram for explaining the operation of a VBV buffer occupancy rate control unit of the moving picture image encoding apparatus shown in Fig. 15.


First Embodiment


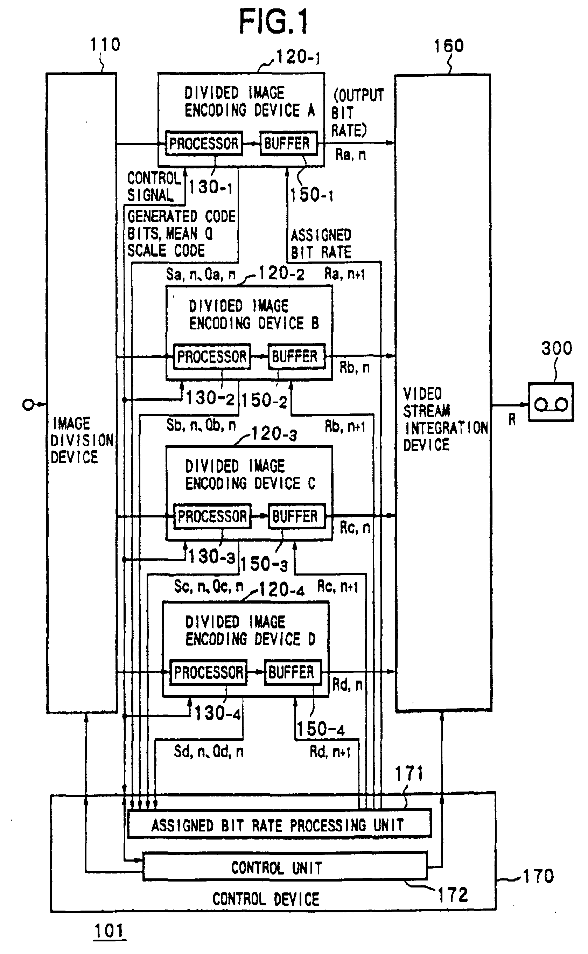

A first embodiment of the present invention will be explained first by referring to Fig. 1 to Fig. 7.

In the first embodiment, a basic moving picture image encoding apparatus and moving picture image decoding apparatus according to the present invention will be illustrated.

First, an explanation will be given of the moving picture image encoding apparatus.

Figure 1 is a block diagram of the configuration of a moving picture image encoding apparatus 101 of the first embodiment.

The moving picture image encoding apparatus 101 has an image division device 110, first to fourth divided image encoding devices $120_{-1}$ to $120_{-4}$, a video stream integration device 160, and a control device 170.

First, an explanation will be given of the configurations of the parts of the moving picture image encoding apparatus 101.

The image division device 110 divides each frame image of the input moving picture image signal to four image signals for every predetermined region and outputs the same to the first to fourth divided image encoding devices $120_{-1}$ to $120_{-4}$.

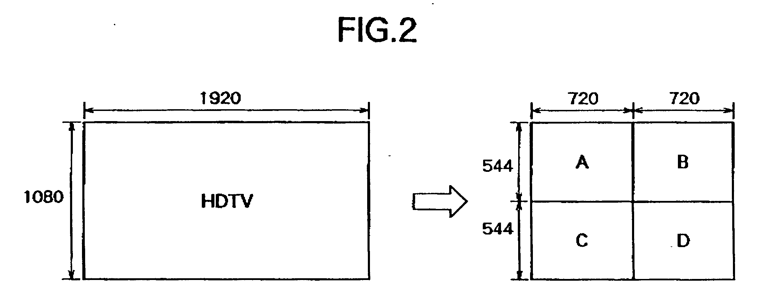

The moving picture image signal input to the moving picture image encoding apparatus 101 is a HDTV video signal as shown in Fig. 2, that is, an interlace signal of a 4:2:2 format consisting of a luminance signal of horizontal 1920 pixels x vertical 1080 lines and a color difference signal of horizontal 960 pixels x vertical 1080 lines. Further, the frame rate is 30 frames/sec.

The image division device 110 first converts the luminance signal to 1440 pixels in the horizontal direction and the color difference signal to 720 pixels in the horizontal direction by filtering. Further, in the vertical direction, the MPEG-2 standard requires that the number of lines be a multiple of 32 lines in the interlace image, so both of the luminance signal and the color difference signal are given eight lines of dummy data under the images to obtain 1088 lines.

Then, the image division device 110 divides the image converted in size in this way to four regions A, B, C, and D as shown in Fig. 2 and outputs the image signals of the divided regions to the first to fourth divided image encoding devices $120_{-1}$ to $120_{-4}$. For example, the luminance signal is divided to four signals of vertical 720 pixels x horizontal 544 lines.

The first to fourth divided image encoding devices $120_{-1}$ to $120_{-4}$ encode and buffer the input image signals of the divided regions and output them to the video stream integration device 160 at required predetermined rates.

Each divided image encoding device $120_{-i}$ (i = 1 to 4) has a processor $130_{-i}$ and a buffer $150_{-i}$.

The processor $130_{-i}$ is a general MPEG-2 MP@ML encoder which encodes the input image signal by the MPEG-2. Further, the created video stream is substantially instantaneously output to the buffer $150_{-i}$ in units of pictures.

Note that the NTSC system sometimes can handle only up to vertical 480 lines. Therefore, it is assumed that the processor $130_{-i}$ of the present embodiment carries out the encoding in a PAL mode handling up to vertical 576 lines. At that time, the frame rate is 25 frames/sec in the PAL mode, so the encoding is carried out at 30 frames/sec by raising the clock frequency.

The buffer $150_{-i}$ temporarily stores the encoded video stream input from the processor $130_{-i}$ and outputs the same to the video stream integration device 160 at the bit rate indicated from an assigned bit rate processing unit 171 of a control device 170.

Accordingly, MPEG-2 MP@ML video streams are output from the first to fourth divided image encoding devices $120_{-1}$ to $120_{-4}$.

Note that the format of the moving picture image signal input to the moving picture image encoding apparatus 101 is 4:2:2, but it is converted to a 4:2:0 format in the processor $130_{-i}$. Therefore, the video stream output from the divided image encoding device $120_{-i}$ is a video stream of a moving picture image signal of the 4:2:0 format.

The video stream integration device 160 combines the four MPEG-2 MP@HL video streams output from the first to fourth divided image encoding devices $120_{-1}$ to $120_{-4}$ to create a single MPEG-2 MP@HL video stream.

Namely, four MPEG-2 MP@ML video streams are broken down in units of slices and reconfigured to a single video stream to obtain a single MPEG-2 MP@HL video stream. At this time, a single one of the sequence, GOP, header data of picture level, extension data, and user data higher than the slice unit is sufficient. Therefore, use is made of only the video stream output from the first divided image encoding device $120_{-1}$ (divided image encoding device A). The video streams output from the second to fourth divided image encoding devices $120_{-2}$ to $120_{-4}$ (divided image encoding devices B to D) are discarded.

More concretely, the video stream integration device 160 outputs only the video stream output from the first divided image encoding device $120_{-1}$ (divided image encoding device A) and discards the video streams output from the second to fourth divided image encoding devices $120_{-2}$ to $120_{-}$ (divided image encoding devices B to D) until the first slice start code appears in each of the four video streams output from the four divided image encoding devices $120_{-1}$ to $120_{-4}$ after the start of encoding in the first to fourth divided image encoding devices $120_{-1}$ to $120_{-4}$.

Further, simultaneously, it rewrites the parameters requiring rewriting for a single MPEG-2 MP@HL video stream, for example, the horizontal pixel size, vertical pixel size, aspect ratio information, bit rate, VBV buffer size, and VBV delay, according to instructions from a control unit 172 of the control device 170 or, where possible, to values found by calculation from the values of the video streams output from the divided image encoding devices $120_{-i}$ (i = 1 to 4).

Note that, when it is intended to rewrite the F code representing the search range of the motion vector to the same value in units of pictures in the first to fourth divided image encoding devices $120_{-1}$ to $120_{-4}$, conversion and rewriting of the value of the motion vector also become necessary and the processing becomes complex. Therefore, desirably the same value is set in advance in each divided image encoding device $120_{-i}$ (i = 1 to 4) from the control unit 172 before the encoding of each picture.

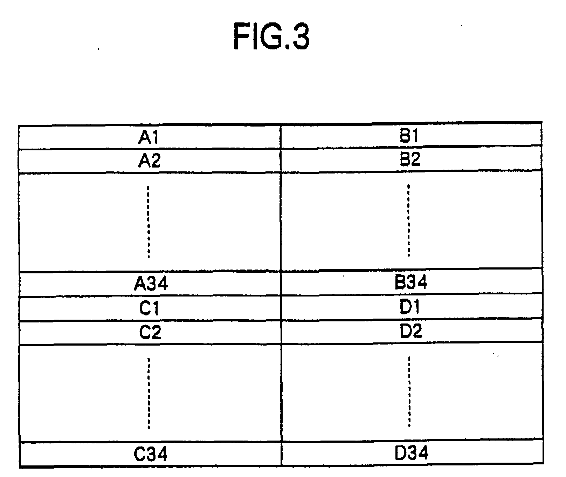

The video streams after the slice start codes are broken down into units of slices and, as shown in Fig. 3, are output rearranged in the order of A1, B1, A2, B2, ..., A34, B34, C1, D1, C2, D2, ..., C34, D34.

At this time, the value of the slice header representing vertical position information of a slice is rewritten to a correct value according to need. Further, the macro block address increment representing horizontal position information in the first macro block of the slice is rewritten to a correct value according to need.

Note that, if a sequence end code is output from a divided image encoding device after the video stream integration device 160 outputs the video stream of the slice D34, the video stream integration device of Fig. 1 outputs one sequence end code and ends the combination or waits for the input of the next sequence start code.

Further, if no sequence end code is output, the next picture start code or a group start code (start code of GOP) is output, so similar processing is repeated.

The control device 170 controls the parts so that the moving picture image encoding apparatus 101 carries out the intended operation.

The control device 170 has the assigned bit rate processing unit 171 and the control unit 172.

The assigned bit rate processing unit 171 makes the four divided image encoding devices $120_{-1}$ to $120_{-4}$ (divided image encoding devices A, B, C, D) carry out encoding with variable rates in accordance with the complexity of the images and, at the same time, controls them so that the sum of the generated bit rates becomes a constant value R in images having the same picture number. For this purpose, the assigned bit rate processing unit 171 instructs the generated bit rates to the first to fourth divided image encoding devices $120_{-1}$ to $120_{-4}$ (divided image encoding devices A, B, C, D) in unit of pictures.

Namely, the assigned bit rate processing unit 171 calculates assigned bit rates Ra,n+1 to Rd,n+1 (n is the frame number) of the next frames to be output from the first to fourth divided image encoding devices $120_{-1}$ to $120_{-4}$ (divided image encoding devices A to D) based on generated code bits Sa,n to Sd,n (n is the frame number) and mean quantization scale codes Qa,n to Qd,n (n is the frame number) for every frame input from the first to fourth divided image encoding devices $120_{-1}$ to $120_{-4}$ (divided image encoding devices A = D) and instructs them to the divided image encoding devices $120_{-i}$ (i = 1 to 4).

Concretely, the assigned bit rate processing unit 171 calculates the assigned bit rates Ra,n+1 to Rd,n+1 of the next frames of the divided image encoding devices $120_{-i}$ by the following equation (3) :

$$Ra,n+1 = R \times Xa,n/(Xa,n + Xb,n + Xc,n + Xd,n)$$

$$Rb,n+1 = R \times Xb,n/(Xa,n + Xb,n + Xc,n + Xd,n)$$

$$Rc,n+1 = R \times Xc,n/(Xa,n + Xb,n + Xc,n + Xd,n)$$

$$Rd, n+1 = R \times Xd,n/(Xa,n + Xb,n + Xc,n + Xd,n) \tag{3}$$

where,

Xa,n = Sa,n x Qa,n
Xb,n = Sb,n x Qb,n
Xc,n = Sc,n x Qc,n
Xd,n = Sd,n x Qd,n
R = output bit rate of moving picture image encoding apparatus 101

The control device 172 controls the parts so that the moving picture image encoding apparatus 101 carries out the intended operation.

Next, an explanation will be given of the operation of the moving picture image encoding apparatus 101.

For example, when an HDTV video signal consisting of a luminance signal of horizontal 1920 pixels x vertical 1080 lines and a color difference signal of horizontal 960 pixels x vertical 1080 lines is input to the moving picture image encoding apparatus 101, first the image division device 110 converts the luminance signal to 1440 pixels in the horizontal direction and the color difference signal to 720 pixels in the horizontal direction. Further, it attaches 8 lines of dummy data in the vertical direction to the bottoms of the images for both of the luminance signal and the color difference signal to obtain 1088 lines. Then, it divides the image signal converted in this way to four regions A, B, C, and D as shown in Fig. 2 and outputs them to the first to fourth divided image encoding devices $120_{-1}$ to $120_{-4}$.

The processors $130_{-i}$ (i = 1 to 4) of the first to fourth divided image encoding devices $120_{-1}$ to $120_{-4}$ are MPEG-2 MP@ML encoders which encode the input image signals of horizontal 720 x vertical 544 lines with suitable code amounts, that is, variable rates, in accordance with the complexity of the images.

Then, the encoded video streams are stored in the buffers $150_{-i}$ in the divided image encoding devices $120_{-i}$.

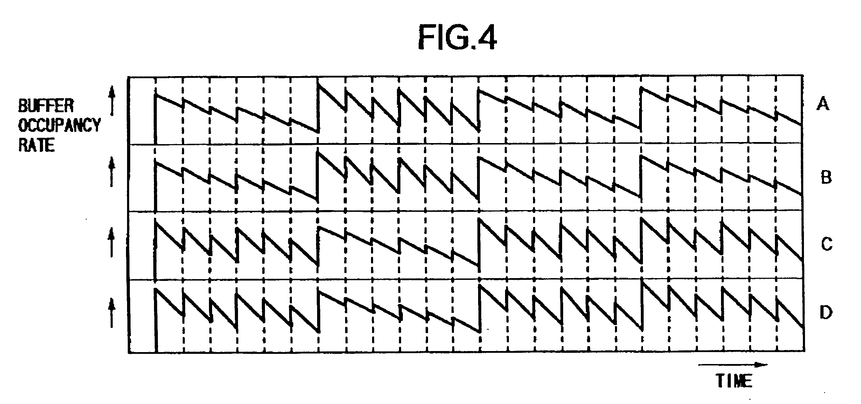

As explained above, the first to fourth divided image encoding devices $120_{-1}$ to $120_{-4}$ encode with variable bit rates, therefore the data occupancies of the buffers $150_{-1}$ to $150_{-4}$ of the divided image encoding devices A to D change as shown in Fig. 4.

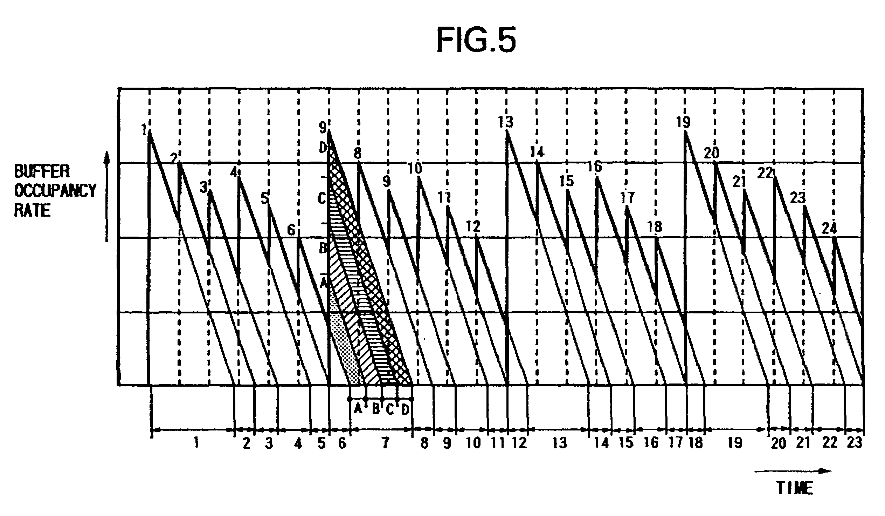

Further, the moving picture image encoding apparatus 101 multiplexes the four video streams by time division in units of pictures to form one video stream for transmission. It does not transmit the four video streams merely in parallel. Accordingly, the change of the sum of the buffer occupancies becomes as shown in Fig. 5.

Note that the information of the generated code bits and mean quantization scale code at this time are used for calculating the assignment of the output bit rates of the next frames and are therefore output to the assigned bit rate processing unit 171.

The assigned bit rate processing unit 171 assigns the output bit rates to the divided image encoding devices $120_{-i}$ based on the generated code bits and mean quantization scale codes of the previous frames input from the processors $130_{-i}$ and based on the above equation 2.

The video streams stored in the buffers $150_{-i}$ are output to the video stream integration device 160 with the bit rates assigned by the assigned bit rate processing unit 171 and combined to one MPEG-2 MP@HL video stream at the video stream integration device 160. Namely, they are broken down into units of slices and output rearranged in the order of A1, B1, A2, B2, ..., A34, B34, C1, D1, C2, D2, ..., C34, and D34 as shown in Fig. 3 from the video stream integration device 160.

At this time, the bit rates Ra(t), Rb(t), Rc(t), and Rd(t) of encoding of the four divided image encoding devices $120_{-1}$ to $120_{-4}$ (divided image encoding devices A, B, C, and D) change according to time, so the video stream integration device 160 carries out the control so that Ra(t) + Rb(t) + Rc(t) + Rd(t) becomes equal to R (= constant).

The MPEG-2 MP@HL video stream created in this way is multiplexed with an audio signal according to need and then transmitted from a transmission line or recorded on a recording medium such as a video tape 300 as shown in Fig. 1.

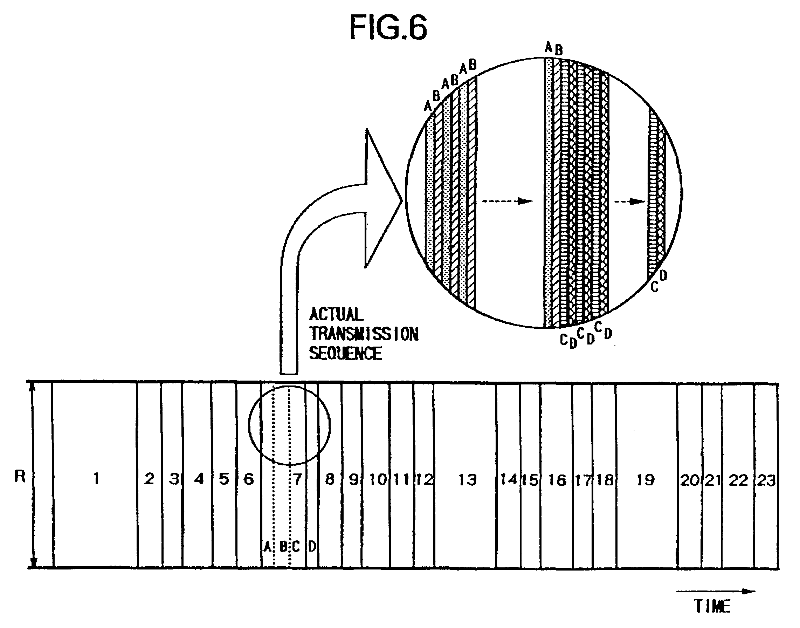

For example, the situation where the video stream integrated in this way is transmitted over the band of the transmission rate R is shown in Fig. 6. As shown in Fig. 3, the image signals are integrated in the line direction, so are transmitted in the order as indicated in the circle of Fig. 6.

Next, an explanation will be given of the moving picture image decoding apparatus of a first embodiment.

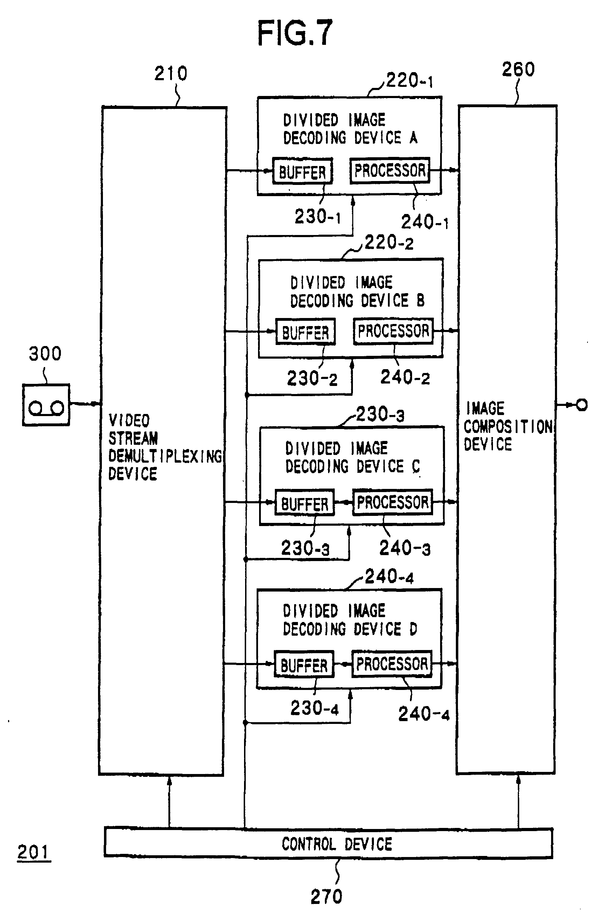

Figure 7 is a block diagram of the configuration of a moving picture image decoding apparatus 201 of the present embodiment.

The moving picture image decoding apparatus 201 has a video stream demultiplexing device 210, first to fourth divided image decoding devices $220_{-1}$ to $220_{-4}$ (divided image decoding devices A to D), an image composition device 260, and a control device 270.

First, an explanation will be given of the configuration of the parts of the moving picture image decoding apparatus 201.

The video stream demultiplexing device 210 demultiplexes the input video stream, for example, one MPEG-2 MP@HL video stream reproduced from the video tape 300 and demultiplexed from the audio signal according to need, to four MPEG-2 MP@ML video streams and outputs the same to the first to fourth divided image decoding devices $220_{-1}$ to $220_{-4}$.

Namely, basically it breaks down one MPEG-2 MP@HL video stream to units of slices, divides them to four, and reconfigures them to obtain four MPEG-2 MP@ML video streams. The sequence, GOP, header data of picture level, extension data. and user data higher than the slice units are common, so the same video stream is used for the four.

More concretely, when a sequence start code appears in the input video stream, the video stream demultiplexing device 210 outputs the input video stream from the sequence start code to when the first slice start code appears to all of four first to fourth divided image decoding devices $220_{-1}$ to $220_{-4}$.

Simultaneously, it rewrites the parameters which have to be rewritten for obtaining four MPEG-2 MP@HL video streams, for example the horizontal pixel size, vertical pixel size, aspect ratio information, VBV buffer size. and the VBV delay, based on the instructions from the control device 270.

The value of the VBV delay cannot be obtained at the time of encoding, but a general decoder can decode by setting this value at 0xFFFF.

Four sets of the horizontal pixel size and the vertical pixel size may be found from the input video streams, but a complex operation becomes necessary. Therefore, these parameters are preferably set at fixed values in the entire system or are notified from the control device by some sort of method.

The value of the bit rate also cannot be obtained at the time of encoding, but if set at a larger value than the value of the original bit rate, a general decoder can decode, so the value at input is used for output without rewriting.

Note that the value of the bit rate written in the video stream is sometimes larger than the maximum bit rate of MP@ML, but the value of the actual bit rate is less than the maximum bit rate (since it is encoded so at the time of encoding), so there is no disadvantage. Where the decoder cannot decode well, the value of the bit rate may be rewritten to the maximum bit rate of MP@ML,

The video stream after the slice start code is broken down into units of slices. The broken down slice units of the video stream are output distributed to the first to fourth divided image decoding devices $220_{-1}$ to $220_{-4}$.

The broken down slice units of the video stream are arranged in the order of A1, B1, A2, B2, ..., A34, B34, C1, D1, C2, D2, ..., C34, D34 as shown in Fig. 3. Accordingly, they are output in the order of A1, A2, ..., A34 to the first divided image decoding device $220_{-1}$ (divided image decoding device A), in the order of B1, B2, ..., B34 to the second divided image decoding device $220_{-2}$ (divided image decoding device B), in the order of C1, C2, ..., C34 to the third divided image decoding device $220_{-3}$ (divided image decoding device C), and in the order of D1, D2, ..., D34 to the fourth divided image decoding device $220_{-4}$ (divided image decoding device D).

At this time, the value of the slice header representing the vertical position information of a slice is rewritten to the correct value according to need. Further, the macro block address increment representing the horizontal position information in the first macro block of the slice is rewritten to the correct value according to need.

Then, when the video stream demultiplexing device 210 receives as input a sequence end code after outputting the slice D34 of the video stream, it outputs the sequence end code to all of the first to fourth divided image decoding devices $220_{-1}$ to $220_{-4}$ and ends the demultiplexing or waits for the input of the next sequence start code.

Further, when no sequence end code is output, the next picture start code or the group start code (start code of GOP) is output, so similar processing is repeated.

The first to fourth divided image decoding devices $220_{-1}$ to $220_{-4}$ buffer the input video streams and sequentially decode and output the same to the image composition device 260.

Each divided image decoding device $220_{-i}$ (i = 1 to 4) has a buffer $230_{-i}$ and a processor $240_{-i}$.

The buffer $230_{-i}$ is a buffer for temporarily storing the input encoded video streams, and the data in an amount required for the decoding is substantially and instantaneously read out from the processor $240_{-i}$ with the unit of pictures at a timing for carrying out the decoding.

The processor $240_{-i}$ is a general decoder of MPEG-2 MP@ML which decodes the input encoded video stream by the MPEG-2 . For example, if it is a video stream encoded at the moving picture image encoding apparatus 101 of the embodiment mentioned above, due to this decoding, an interlace signal consisting of a luminance signal of horizontal 720 pixels x vertical 544 lines, having a 4:2:0 format, and having a frame rate of 30 frames/sec is reconstructed and output.

The image composition device 260 combines the four moving picture image signals output from the first to fourth divided image decoding devices $220_{-1}$ to $220_{-4}$ to one moving picture image signal to restore and output the original moving picture image signal.

Specifically, first, the image composition device 260 combines the four moving picture image signals output from the first to fourth divided image decoding devices $220_{-1}$ to $220_{-4}$. As a result, a moving picture image signal of the 4:2:0 format and 30 frames/sec consisting of a luminance signal of a size of horizontal 1440 pixels x vertical 1088 lies and a color difference signal of a size of horizontal 720 pixels x vertical 544 lines is obtained.

Next, the dummy data in the lower portion of the picture attached in the image division device 110 of the moving picture image encoding apparatus 101 as shown in Fig. 2 is removed to change the size of the luminance signal to horizontal 1440 pixels x vertical 1080 lines and the size of the color difference signal to horizontal 720 pixels x vertical 540 lines.

Further, reverse processing to the filtering applied at the image division device 110 of the moving picture image encoding apparatus 101 is carried out, whereby the size in the horizontal direction becomes larger, that is, the size of the luminance signal becomes 1920 pixels x vertical 1080 lines and the size of the color difference signal becomes horizontal 960 pixels and vertical 540 lines.

The moving picture image signal created in this way is output from the moving picture image decoding apparatus 201 and displayed on for example a video monitor.

Next, an explanation will be given of the operation of the moving picture image decoding apparatus 201.

The MPEG-2 MP@HL video stream reproduced and input from a recording medium such as the video tape 300 as shown in Fig. 7 to the moving picture image decoding apparatus 201 is demultiplexed from the audio signal according to need and then input to the video stream demultiplexing device 210.

The single video stream input to the moving picture image decoding apparatus 201 is demultiplexed to four MPEG-2 MP@HL video streams which are then input to the first to fourth divided image decoding devices $220_{-1}$ to . $220_{-4}$. Namely, a single MPEG-2 MP@HL video stream is broken down into units of slices which are then divided to four and reconfigured to obtain four MPEG-2 MP@HL video streams.

Explaining this demultiplexing of the video stream in further detail, when a sequence start code appears in the input video stream, the video stream demultiplexing device 210 outputs the input video stream from the sequence start code to when the first slice start code appears to all of the first to fourth divided image decoding devices $220_{-1}$ to $220_{-4}$. Further, simultaneously, it rewrites the parameters which have to be rewritten for obtaining four MPEG-2 MP@HL video streams, for example, the horizontal pixel size, vertical pixel size, aspect ratio information, VBV buffer size, and the VBV delay, according to instructions from the control device 270.

Then, when a slice start code appears, it breaks down the following video stream into units of slices which it then outputs in the order of A1, A2, ..., A34 to the first divided image decoding device $220_{-1}$, in the order of B1, B2, ..., B34 to the second divided image decoding device $220_{-2}$, in the order of C1, C2, ..., C34 to the third divided image decoding device $220_{-3}$, and in the order of D1, D2, ..., D34 to the fourth divided image decoding device $220_{-4}$.

The MPEG-2 MP@HL video streams input to the first to fourth divided image decoding devices $220_{-1}$ to $220_{-4}$ are stored in the buffers $230_{-i}$ (i = 1 to 4) and then appropriately read out to the processors $240_{-i}$ and decoded. As a result, interlace signals of a 4:2:0 format having a frame rate of 30 frames/sec consisting of a luminance signal of horizontal 720 pixels x vertical 544 lines are output.

The four moving picture image signals output from the first to fourth divided image decoding devices $220_{-1}$ to $220_{-4}$ are all input to the image composition device 260 where they are first combined to a single moving picture image signal. Namely, a combined image of a 4:2:0 format having a frame rate of 30 frames/sec consisting of a luminance signal of horizontal 1440 pixels x vertical 1088 lines and a color difference signal of horizontal 720 pixels x vertical 544 lines is created. Next, the dummy data in the lower portion of the picture is removed to obtain a luminance signal of horizontal 1440 pixels x vertical 1080 lines and a color difference signal of horizontal 720 pixels x vertical 540 lines, then the reverse processing to the filtering applied at the image division device 110 of the moving picture image encoding apparatus 101 is carried out to convert the luminance signal to 1920 pixels x horizontal 1080 lines and the color difference signal to horizontal 960 pixels x vertical 540 lines,

Then, the moving picture image signal created in this way is output from the image composition device 260 and input to for example the video monitor and displayed.

In this way, in the moving picture image encoding apparatus 101 and the moving picture image decoding apparatus 201 of the present embodiment, the picture is divided as shown in Fig. 2 and the divided regions are encoded and decoded by different encoding devices and decoding devices. At that time, even if the overall bit rats is constant, the encoding is carried out in the encoding devices in accordance with patterns and motions with variable bit rates. Accordingly, even in a case where the patterns and the motions are differ largely according to the positions in the picture, a high quality image is obtained in comparison with a case where the encoding is carried out with an identical and fixed bit rate in the encoding devices.

Further, for this purpose, the control device 170 of the moving picture image encoding apparatus 101 controls the bit rate of the integrated video stream to be constant by instructing only the generated bit rates to the first to fourth divided image encoding devices $120_{-1}$ to $120_{-4}$ (divided image encoding devices A, B, C, D) in picture units or the higher GOP units. Namely, when dividing one image and encoding the same by a plurality of encoding devices, the VBV buffer is also divided and assigned to the encoding devices. Only the bit rates are assigned to the encoding devices. Thus, the rate control becomes very easy. As a result, the load on the system relating to the control of the bit rate becomes small.

Further, it is not necessary to provide a large capacity buffer on the decoding side unlike the case where a value such as the target bits is set for every frame for each of a plurality of MP@ML encoding devices, so enlargement of the circuit scale of the decoding apparatus can be avoided.

Second Embodiment

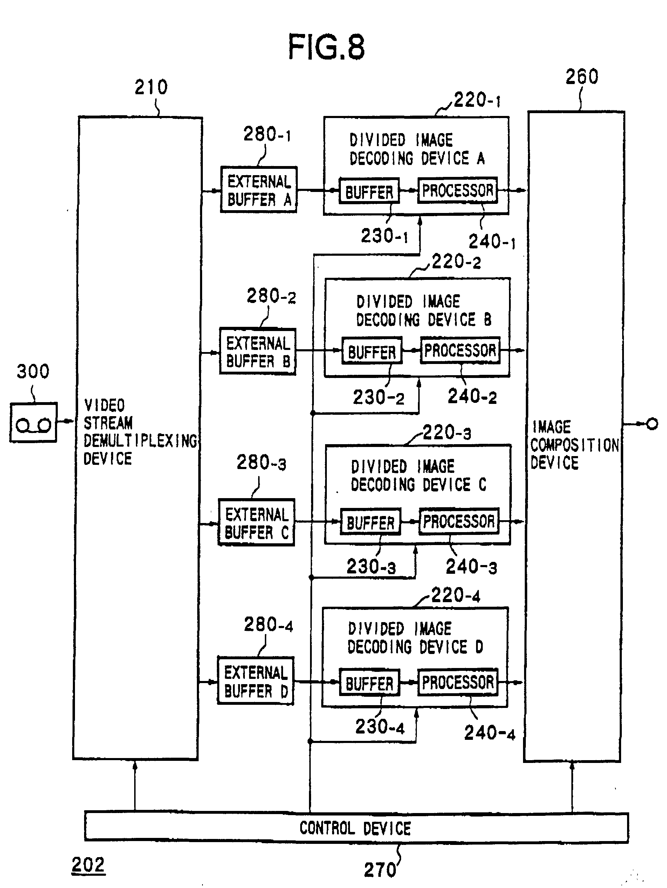

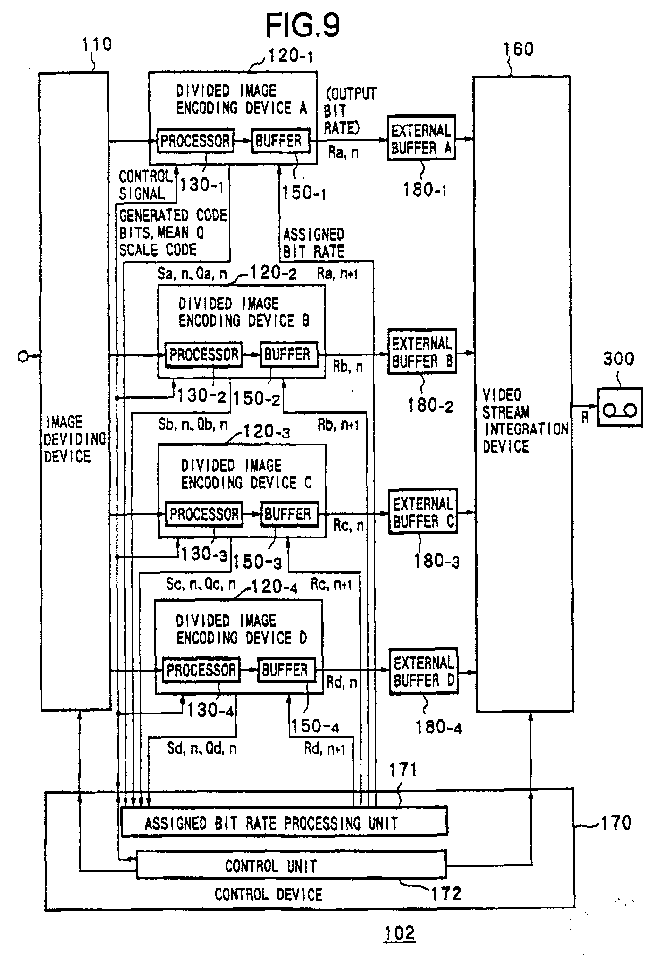

A second embodiment of the present invention will be explained next by referring to Fig. 8 and Fig. 9.

Figure 8 is a block diagram of the configuration of a moving picture image decoding apparatus 202 of the second embodiment.

As shown in Fig. 8, the configuration of the moving picture image decoding apparatus 202 of the second embodiment is the same as the configuration of the moving picture image decoding apparatus 201 of the first embodiment, but external buffers $280_{-i}$ (i = 1 to 4) are provided before the first to fourth divided image decoding devices $220_{-1}$ to $220_{-4}$ in addition to the parts of the moving picture image decoding apparatus 201.

In the moving picture image decoding apparatus 201 of the first embodiment, if the decoding is not started at the processors $240_{-i}$ after a delay of a certain degree of time after the start of the input of the video streams to the buffers $230_{-i}$ (i = 1 to 4) of the first to fourth divided image decoding devices $220_{-1}$ to $220_{-4}$, there is a possibility of the disadvantage arising of no video streams being present for decoding at the processors $240_{-i}$ in the buffers, so the decoding cannot be smoothly carried out.

The lowest value T of the delay time at this time is given by equation (4) when the sum of four VBV buffer sizes assumed at the time of encoding in the divided image encoding devices $120_{-i}$ (i = 1 to 4) of the moving picture image encoding apparatus 101 is B and the sum of the four generated bit rates is R:

$$T = B/R \qquad\qquad (4)$$

This value T is common for all of the first to fourth divided image decoding devices $220_{-1}$ to $220_{-4}$ of the moving picture image decoding apparatus 201.

If the decoding were not carried out by using a plurality of decoding devices as in the moving picture image decoding apparatus 201, but carried out by using one decoding apparatus, due to this time T, it would be possible to carry out the decoding without causing either overflow or underflow of the buffer. However, where the video stream is divided and decoded by using a plurality of decoding devices as in the moving picture image decoding apparatus 201, irrespective of the fact that the encoding was carried out under control so as to cause neither overflow nor underflow of the VBV buffers at the time of encoding, since the generated bit rate of each divided image encoding device $120_{-i}$ changes, overflow is sometimes caused.

In order to solve this disadvantage, as shown in Fig. 8, external buffers $280_{-i}$ (i = 1 to 4) are provided in front of the first to fourth divided image decoding devices $200_{-1}$ to $220_{-4}$.

When employing such a configuration, by inputting a video stream generated after a buffer $230_{-i}$ of a divided image decoding device $220_{-i}$ becomes full to an external buffer $280_{-i}$, it becomes possible to carry out the decoding without a breakdown of the buffers $230_{-i}$ of the divided image decoding devices $220_{-i}$.

Figure 9 is a block diagram of the configuration of the moving picture image encoding apparatus 102 of the second embodiment.

The possibility of overflow of a buffer can arise not only in a decoding apparatus, but also in an encoding apparatus.

As mentioned before, the buffers $150_{-i}$ of the divided image encoding devices $120_{-i}$ of the moving picture image encoding apparatus 101 repeatedly carry out processing whereby the buffers $150_{-1}$ and $150_{-2}$ of the first and second divided image encoding devices $120_{-1}$ and $120_{-2}$ alternately output one picture's worth of video stream in units of slices, then the buffers $150_{-3}$ and $150_{-4}$ of the third and fourth divided image encoding devices $120_{-3}$ and $120_{-4}$ alternately output one picture's worth of video stream in units of slices.

Namely, a restriction is added to the output of each buffer $150_{-i}$ by the video stream integration device 160. Video streams are never simultaneously output from two or more buffers.

Accordingly, where each buffer has a high occupancy rate, if for example large video streams are generated, a long time is taken for the output of the video streams from one set of buffers. The video streams are not output from the other set of buffers during this period. Therefore, the occupancy rates increase more and more, so there is a possibility of overflow.

Therefore, in the same way as the moving picture image decoding apparatus 202, as shown in Fig. 9, external

buffers $180_{-i}$ (i = 1 to 4) are provided after the first to fourth divided image encoding devices $120_{-1}$ to $120_{-4}$.

By providing them, the video streams generated in the first to fourth divided image encoding devices $120_{-1}$ to $120_{-4}$ can be output to the external buffers $180_{-1}$ to $180_{-4}$ without the restriction of output by the video stream integration device 160. Then, as a result, the encoding becomes possible without a breakdown of the buffers $150_{-i}$ of the divided image encoding devices $120_{-i}$.

By placing buffers on the encoding apparatus side and the decoding apparatus side in this way, it becomes possible to carry out control without exceeding the capacity of the transmission line and the recording medium and without causing overflow and underflow of the buffers of the encoder and the decoder.

Third Embodiment

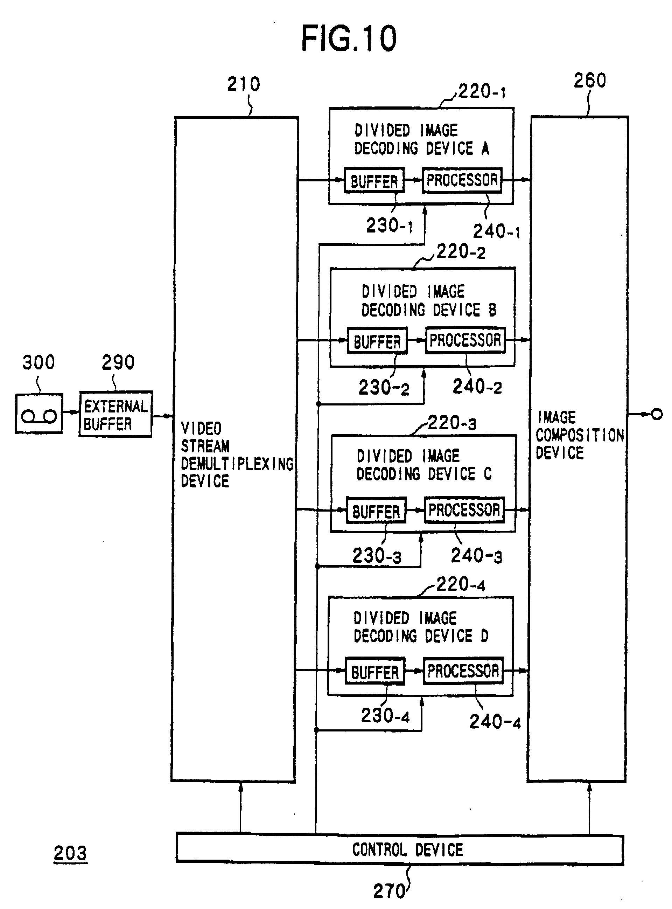

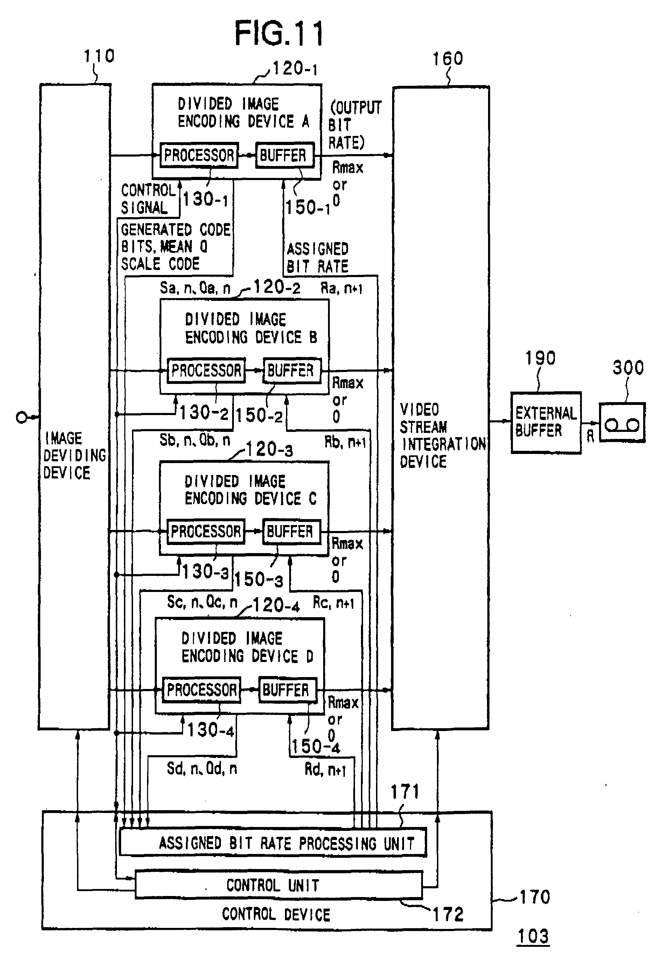

A third embodiment of the present invention will be explained next by referring to Fig. 10 and Fig. 11.

In the third embodiment, another example of the configurations of the moving picture image decoding apparatus and the moving picture image encoding apparatus having external buffers similar to the second embodiment is shown.

Figure 10 is a block diagram of the configuration of a moving picture image decoding apparatus 203 of the third embodiment.

In the moving picture image decoding apparatus 203, the external buffers are not provided in front of the divided image decoding devices $220_{-i}$. Instead, one is provided in front of the video stream demultiplexing device 210 as shown in Fig. 10.

Then, by such a configuration, the video stream is input to an external buffer 290 with a constant rate. The video stream is then output to the video stream demultiplexing device 210 in accordance with the empty state of the buffers $230_{-i}$ of the first to fourth divided image decoding devices $220_{-1}$ to $220_{-4}$.

In such a configuration as well, it becomes possible to smoothly carry out the decoding without a breakdown of the buffers $230_{-i}$ of the divided image decoding devices $220_{-i}$.

Figure 11 is a block diagram of the configuration of the moving picture image encoding apparatus 103 of the third embodiment.

In the moving picture image encoding apparatus 103 as well, external buffers are not provided after all of the divided image encoding devices $120_{-i}$. Instead, one is provided after the video stream integration device 160 as shown in Fig. 11.

By such a configuration, as soon as video streams are generated in the divided image encoding devices $120_{-i}$, they are integrated at the video stream integration device 160 and the video stream created as a result is stored in this external buffer 190. This external buffer 190 then outputs the video stream at a constant rate.

In this case, since there is an upper limit on the bit rates of the video streams output from the buffers $150_{-i}$ of the divided image encoding devices $120_{-i}$, in some cases, the occupancy rate of the data sometimes exceeds the size of the VBV buffer.

However, the maximum value of the buffer occupancy rate in this case is smaller in compariscn with the case where the external buffer 190 is not provided. Accordingly, by employing such a configuration, the possibility of the breakdown of the buffers $150_{-i}$ of the divided image encoding device $120_{-i}$ can be lowered.

Further, generally the size of the buffers $150_{-i}$ of the divided image encoding devices $120_{-i}$ is made larger than necessary and is larger than the VBV buffer size in many cases. Accordingly, if the maximum value of the buffer occupancy rate is less than the size of the buffers $150_{-i}$, the buffers $150_{-i}$ will not break down. Then, by such a configuration, it is not necessary to place buffers immediately after the divided image encoding devices $120_{-i}$.

Further by placing the buffers on the encoding apparatus side and the decoding apparatus side in this way, it becomes possible to carry out control without exceeding the capacity of the transmission line and the recording medium and without causing overflow or underflow of the buffers of the encoders and the decoders.

Fourth Embodiment

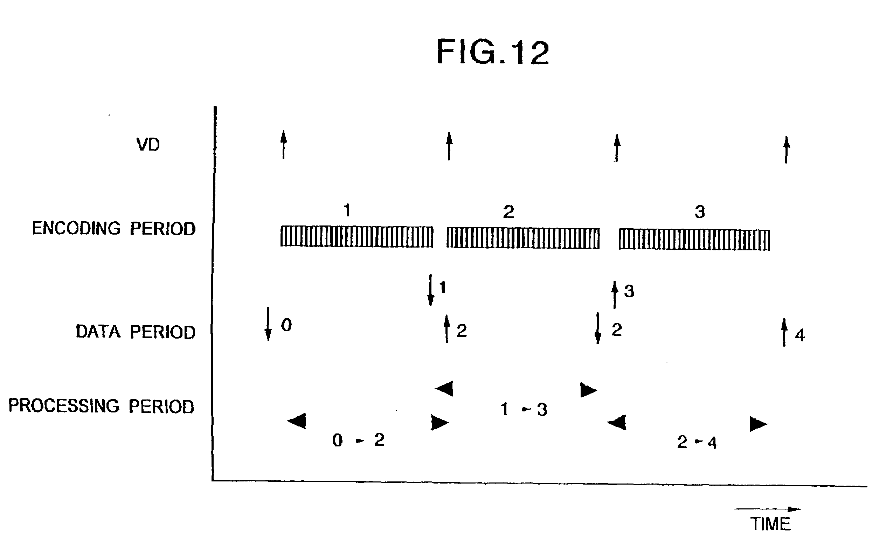

A fourth embodiment of the present invention will be explained next by referring to Fig. 12 to Fig, 17.

In a low cost apparatus aimed at by the present invention, the data transfer capability between the encoding devices and the external control device and the processing capability of the external control device are often not large. For this reason, as shown in Fig. 12, a delay arises in units of pictures until the bit rate is updated when the quality of the input image changes

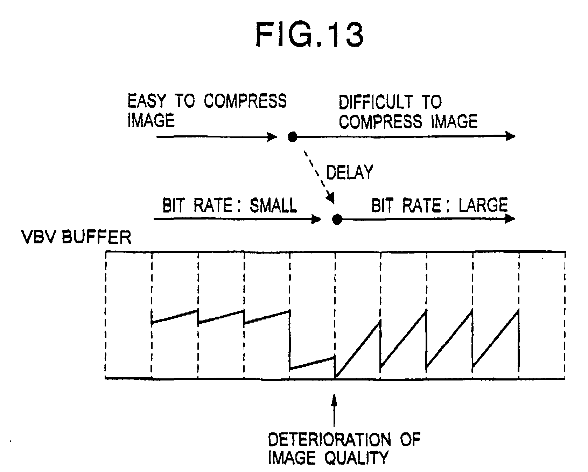

As a result, for example, as shown in Fig. 13, when a difficult complex image is suddenly input to an encoding device which had continuously received easy images theretofore and set at a low bit rate, a large amount of bits are generated and the occupancy rate of the VBV buffer becomes low. As opposed to this, the bit rate does not immediately become large. Therefore, if a difficult image is continuously input even after that, the amount of bits which can be generated is restricted low regardless of the difficult image, therefore the quality of the image becomes extremely poor.

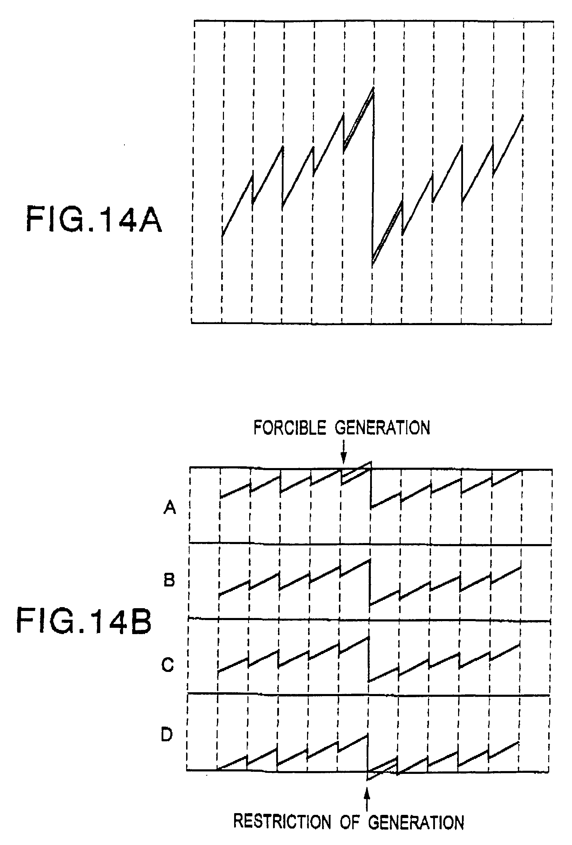

Further, sometimes, due to the difficulty of the image input to each encoding device and the change of the bit rate etc., the VBV buffer occupancy rate of a certain encoding device becomes low, while the VBV buffer occupancy rate of another encoding device becomes high. At this time, when viewing all of the VBV buffers together as the HDTV use compressing and encoding apparatus, as shown in Fig. 14A, the occupancy rate changes near the middle of the VBV buffers, so preferred rate control is carried out. When viewing individual VBV buffers, however, as shown in Fig. 14B, the occupancy rates become lopsided. Namely, while there are encoding devices restricted in the amount of bits which can be generated and not capable of giving a sufficient quality of image, there are also encoding devices compelled to generated more than the necessary amount of bits, so the quality of the image is not suitable.

A moving picture image encoding apparatus coping with such a disadvantage and capable of obtaining a higher quality of image at a low cost will be explained next as a fourth embodiment.

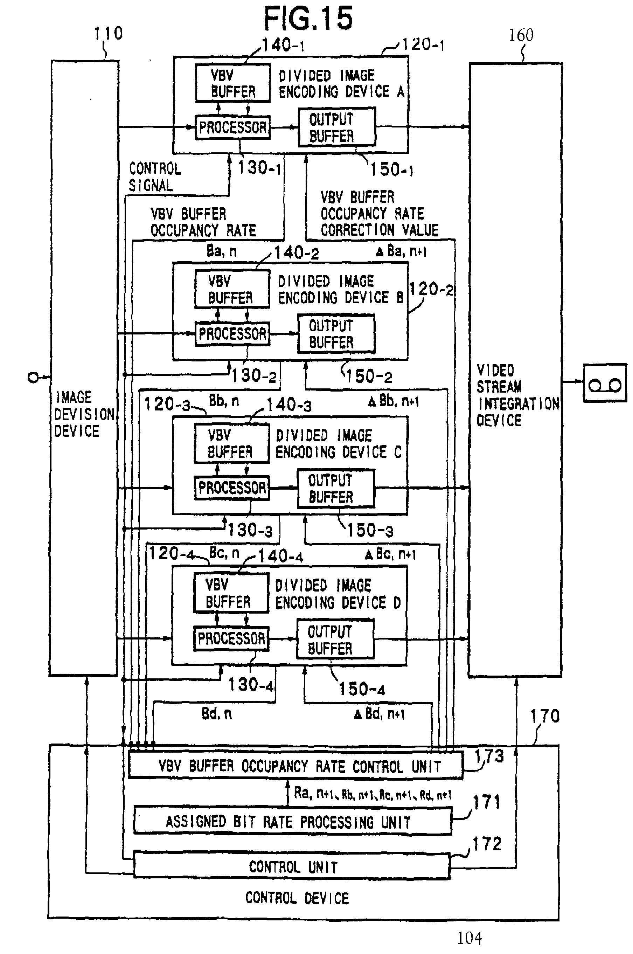

Figure 15 is a block diagram of the configuration of a moving picture image encoding apparatus 104 of the fourth embodiment.

As shown in Fig. 15, the configuration of the moving picture image encoding apparatus 104 of the fourth embodiment is basically the same as the configuration of the moving picture image encoding apparatus 101 of the first embodiment. The fourth embodiment differs from the moving picture image encoding apparatus 101 of the first embodiment however in the detailed parts of the processing in each divided image encoding device $120_{-i}$ (i = 1 to 4), the provision of a VBV buffer occupancy rate control unit 173 in the control device 170, and the detail parts of the control of the control device 170 along with that.

Note that the VBV buffers $140_{-i}$ are shown in the divided image encoding devices $120_{-i}$ in Fig. 15, but they have also been provided in the moving picture image encoding apparatuses of the first to third embodiments heretofore. In the present embodiment, the characteristic feature is the processing with respect to this VBV buffers $140_{-i}$, so they are clearly shown in this figure.

Below, an explanation of the moving picture image encoding apparatus 104 of the fourth embodiment will be made focusing on the characteristic portions mentioned above, that is, the differences from the moving picture image encoding apparatus 101 of the first embodiment.

First, an explanation will be given of the characteristic feature of the processing of the divided image encoding devices $120_{-i}$ (i = 1 to 4).

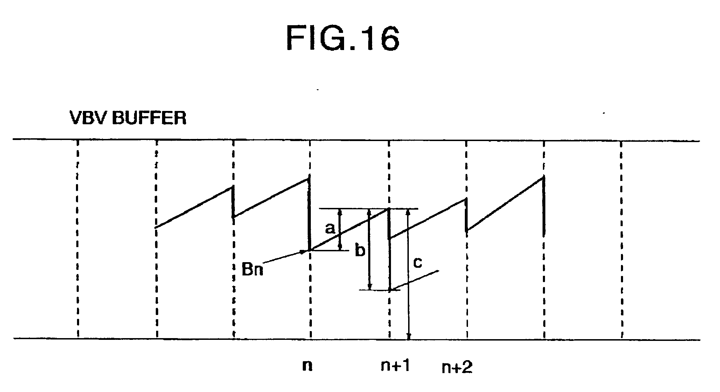

In each divided image encoding device $120_{-i}$ of the moving picture image encoding apparatus 104, in the same way as the divided image encoding devices of the embodiments mentioned above, as shown in Fig. 16, when the encoding of an n-th picture is ended, based on the set bit rate, the target bits for when encoding the (n+1) th picture are found from the number of pictures or bits remaining in the GOP and a characteristic amounts of each of the I, P, and B pictures. Further, when the bits obtained as a result of actual encoding differ largely from the target bits due to a sudden change of the characteristics of the input image or the like, the maximum value and the minimum value of the generated bits that is, the parameters indicating how much error is permitted, are found.

Usually, these maximum bits and minimum bits are set to values that will not cause overflow and underflow of the VBV buffers $140_{-i}$.

For example, in Fig. 16, the buffer occupancy rate immediately after the encoding of the n-th picture is defined as Bn. At this time, an occupancy rate "a" increased to immediately before the encoding of the n+1-th picture is found as $a = R \times (tn+1 - tn)$ from the bit rate R set from the external control device and the time tn+1 - tn until when the (n+1) th picture is encoded. The buffer occupancy rate immediately before the (n+1)th picture is encoded is set as the maximum value "c" not causing underflow of the VBV buffers $140_{-i}$, that is, the buffer occupancy rate immediately before the encoding of the (n+1)th picture.

With such a method, however, when the bits "c" are generated due to the sudden input of a difficult image in the (n+1)th picture as explained by referring to Fig. 13, the bit rate does not immediately become large, therefore the maximum generated bits of the n+2nd picture become small, sufficiently large bits cannot be assigned to the difficult image, and the quality of image is deteriorated.

Therefore, in the divided image encoding devices $120_{-i}$ of the moving picture image encoding apparatus 104 of the fourth embodiment, the maximum generated bits "b" of the (n+1) th picture are set at a value smaller than the maximum value "c" not causing the underflow of the VBV buffers $140_{-i}$ as shown in Fig. 16.

Specifically, in the present embodiment, the maximum generated bits "b" are set to for example (a+c)/2.

Then, furthers when bits the same as "b" or near that are generated in the (n+1)th picture, the bit rate after encoding the n+2nd picture is set at a large value to eliminate the restriction of the maximum bits of the n+2nd picture.

Note that, when the change of the bit rate for a change of the image is not for one picture as shown in Fig. 16, but for example two pictures, it is possible to find the maximum generated bits "b" as (2 x a + c)/3.

At this time, even when bits near the maximum bits are generated, the method of restriction may be changed in accordance with the length of the delay of the change of the bit rate with respect to the change of the difficulty of the image.

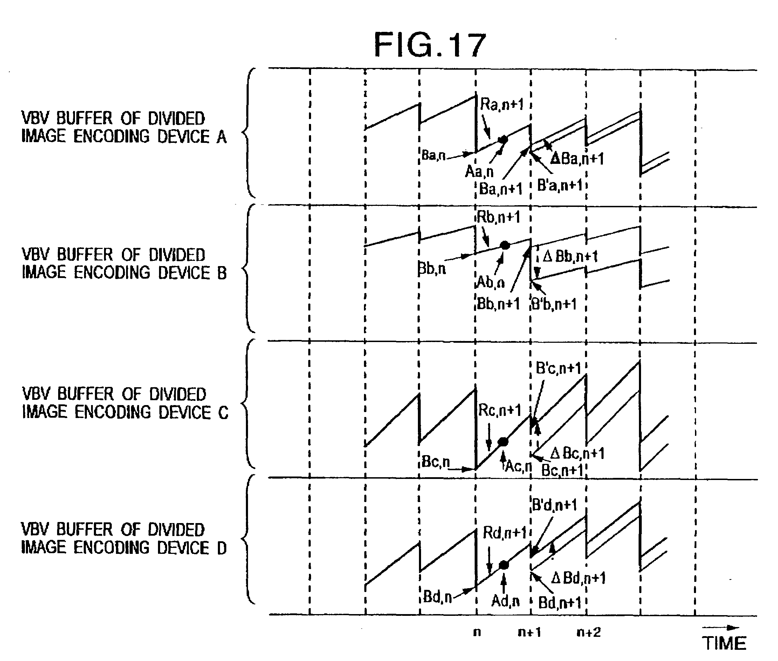

Next, the processing according to the VBV buffer occupancy rate control unit 173 in the control device 170 will be explained by referring to Fig. 17.

The VBV buffer occupancy rate control unit 173 finds the intermediate values Aa,n, Ab,n, Ac,n, and Ad,n between the occupancy rates of the VBV buffers $110_{-i}$ immediately after the output of the video streams of the n-th picture and the occupancy rates of the VBV buffers $140_{-i}$ immediately before the output the video streams of the n-1st picture and controls the divided image encoding devices $120_{-i}$ so that these values become equal among the VBV buffers $140_{-1}$ to $140_{-4}$ since the magnitude of the change of the occupancy rates of the VBV buffers $140_{-i}$ changes according to the bit rate.

Accordingly, first, the divided image encoding devices $120_{-i}$ transfer the occupancy rates Ba,n, Bb,n, Bc,n, and Bd,n of the VBV buffers $140_{-1}$ to $140_{-4}$ to the VBV buffer occupancy rate control unit 173 of the control device 170 immediately after finishing encoding of the n-th picture and outputting the video streams.

Further, the assigned bit rate processing unit 171 finds the bit rates Ra,n+1, Rb,n+1, Rc,n+1, and Rd,n+1 from when the video streams of the n-th picture were output in the divided image encoding devices $120_{-i}$ to when the video streams of the (n+1)th picture were output and transfers the same to the VBV buffer occupancy rate control unit 173.

The VBV buffer occupancy rate control unit 173 first finds the intermediate values Aa,n, Ab,n, Ac,n, and Ad, n between the VBV buffer occupancy rates immediately after the output of the video streams of the n-th picture and the VBV buffer occupancy rates immediately before the output of the video streams of the (n+1)th picture from equation (5) based on these values.

$$Aa,n = Ba,n + Ra,n+1 \times (tn+1 - tn)/2$$

$$Ab,n = Bb,n + Rb,n+1 \times (tn+1 - tn)/2$$

$$Ac,n = Bc,n + Rc,n+1 \times (tn+1 - tn)/2$$

$$Ad,n = Bd,n + Rd,n+1 \times (tn+1 - tn)/2 \tag{5}$$

where, tn and tn+1 are times when the video streams at the time of encoding of the n-th picture and the (n+1)th picture are output.

Next, by equation (6), the VBV buffer occupancy rate control unit 173 finds the correction values $\Delta$Ba,n+1, $\Delta$Bb,n+1, $\Delta$Bc,n+1, and $\Delta$Bd,n+1 of the occupancy rates of the VBV buffers $140_{-i}$ in order to make the intermediate values Aa,n, Ab,n, Ac,n, and Ad,n obtained in this way equal.

$$\Delta Ba,n+1 = Am,n + Aa,n$$

$$\Delta Bb,n+1 = Am,n + Ab,n$$

$$\Delta Bc,n+1 = Am,n + Ac,n$$

$$\Delta Bd,n+1 = Am,n + Ad,n \tag{6}$$

where, Am,n = (Aa,n + Ab,n + Ac,n + Ad,n)/4

Then, the VBV buffer occupancy rate control unit 173 transfers the VBV buffer occupancy rate correction values found in this way to the divided image encoding devices $120_{-i}$.

The divided image encoding devices $120_{-i}$ correct the occupancy rates of the VBV buffers immediately after the output of the video streams of the (n+1)th picture as shown in equation (7).

$$B'a,n+1 = Ba,n+1 + \Delta Ba,n+1$$

$$B'b,n+1 = Bb,n+1 + \Delta Bb,n+1$$

$$B'c,n+1 = Bc,n+1 + \Delta Bc,n+1$$

$$B'd,n+1 = Bd,n+1 + \Delta Bd,n+1 \tag{7}$$

For example, when assuming that the VBV buffer occupancy rate becomes Ba,n+1 immediately after the output of the video streams of the (n+1)th picture, the divided image encoding device A adds the correction value ΔBa, n+1 to this value to find a new VBV buffer occupancy rate B'a,n+1 and uses this for the rate control of the encoding after that.

Note that, when there is a change when the occupancy rates of all VBV buffers $140_{-1}$ to $140_{-4}$ are high or conversely when there is a change when the occupancy rates of all VBV buffers $140_{-1}$ to $140_{-4}$ are low, no correction is carried out. When carrying out this correction, the occupancy rate is further raised for VBV buffers $140_{-i}$ having a relatively high occupancy rate, while the occupancy rate is further lowered for VBV buffers $140_{-i}$ having a relatively low occupancy rate, so overflow and underflow easily occur.

If overflow or underflow of the VBV buffers $140_{-i}$ will occur due to this correction, it is effective to stop correction is stopped before causing them and pass the amount which could not be corrected on to the next correction.

Note that if controlling the occupancy rates of VBV buffers in this way in ordinary constant rate encoding apparatuses and decoding apparatuses, the buffers will break down and not normally operate. In the moving picture image encoding apparatus according to the present invention, however, the occupancy rates are controlled for individual VBV buffers $140_{-i}$ for divided encoding. The total occupancy rate is not controlled. Therefore, even in a case where not dividing the video stream at the time of decoding and decoding by a single decoding apparatus, the decoding can be carried out with a constant rate without disadvantage.

Further, even when dividing the video stream, the rate control is carried out by a constant rate model in order to make the rate of the integrated video stream constant. In actual operation, however, video streams are transferred only when transfer is possible as in a variable rate model, therefore the buffers will not suffer from underflow,

Note that overflow may occur, but this can be solved by providing an external buffer after the encoding devices or before the decoding devices as in the moving picture image encoding apparatuses of the second embodiment and the third embodiment.

In this way, in the moving picture image encoding apparatus 104 of the fourth embodiment, first, when assigning bit rates to the divided image encoding devices $120_{-i}$ from the assigned bit rate processing unit 171, the maximum value of the generated bits is further restricted in order to prevent underflow. As a result, even when the image suddenly changes to a complex image, the bit rates are controlled to gradually becomes large. Therefore, there is much less assignment of the second and following bit rates and the quality of image can be prevented from deteriorating.

Further, the VBV buffer occupancy rate control unit 173 manages the VBV buffer occupancy rates of the divided image encoding devices $120_{-i}$ by the intermediate values of the processing for each picture and corrects the VBV buffer occupancy rates so that the intermediate values become uniform. Namely, the buffer occupancy rates are made to converge among the plurality of VBV buffers. As a result, in the divided image encoding devices $120_{-i}$, unique conditions where the bits which can be generated are restricted to an extent that a sufficient quality of image cannot be obtained or where generation of more than necessary bits is forced can be avoided.

Modification

Note that the present invention is not limited to the first to fourth embodiments. Various preferred modifications are possible.

For example, in the above embodiments, one image was divided and encoded at a plurality of encoding devices, but it is also possible to have a plurality of images encoded by each encoding device and to have the resultant video streams integrated in the same way as in the present embodiment. Namely, as the method of multiplexing, the video streams may be synchronized in units of pictures and transmitted by time division.

Further, in the above moving picture image encoding apparatus, the parameters which had to be written for obtaining a single MPEG-2 MP@HL video stream, for example, the horizontal pixel size, vertical pixel size, aspect ratio information, bit rate, VBV buffer size, and the VBV delay, were rewritten in the video stream integration device 160. However, video streams having rewritten values may also be created and output in the divided image encoding devices $120_{-i}$ (i = 1 to 4) in advance based on instructions from the control unit 172 to the divided image encoding devices $120_{-i}$ (i = 1 to 4). The video stream integration device 160 may then output a video stream without rewriting the parameters.

Further, the method of calculation of the bit rates assigned in the assigned bit rate processing unit 171 is not limited to the method of calculation based on equation (1) used in the above embodiments. Any method can be used. Preferably, a method of calculating the bit rates to be assigned to the encoding devices based on the information of the complexity and difficulty of the image is employed, but various other methods can also be considered. Any method can be employed.

Further, with the method shown in equation (1) used in the above embodiments, the bit rates to be assigned were found based on the generated code bits and mean quantization scale of the image one frame before, but it is also possible to refer to for example the image two frames or three frames before or refer to a plurality of previous images. Various methods can be considered resembling equation (1). It is also possible to calculate the bit rates to be assigned by such methods.

Further, in the moving picture image encoding apparatus 104 of the fourth embodiment, correction was carried out in order to make the occupancy rates of the individual VBV buffers $140_{-i}$ equal, but the present invention is not limited to this. Any correction can be carried out so long as the total VBV buffer occupancy rate does not change.

Further, in the above fourth embodiment, the result of the (n+1)th encoding was corrected based on the result of the n-th encoding, but it is also possible to correct the n-th encoding result or correct the n+2nd and following encoding results.

Further, it is possible to correct every picture or correct at any other timing.

Further, in the moving picture image encoding apparatus 104 of the fourth embodiment, the states of the VBV buffer occupancy rates were monitored and corrected in units of pictures. However, the VBV buffer occupancy rates generally periodically change in units of GOP. Acccrdingly, it is also effective to use VBV buffer occupancy rates averaged for one GOP or more as the basis for calculation of the correction values.

Namely, the average VBV buffer occupancy rates may be monitored and the occupancy rates corrected to be lowered for VBV buffers where the occupancy rates are gradually rising. By this, the bits generated in the divided image encoding devices $120_{-i}$ will be effectively restricted for abrupt changes of the VBV buffer occupancy rates, while the VBV buffer occupancy rates will be effectively corrected in the VBV buffer occupancy rate control unit 173 for gradual changes of the occupancy rates of the VBV buffers. Therefore, these two processings will effectively act and it will become possible to obtain a high quality of image.

Further, in the above embodiments, the number of regions the image was divided into was set at four, but it may be any natural number other than four.

In addition, the types of the HDTV signal and the SDTV signal are not limited in any way. The present invention can be applied to signals of any standard.

Summarizing the effects of the invention, in this way, according to the present invention, an image encoding apparatus and an image encoding method capable of encoding moving picture image signals having a large number of pixels such as HDTV signals with a high image quality by a further simpler control and at a lower cost can be provided.

Further, an image decoding apparatus and an image decoding method capable of decoding a moving picture image signals encoded in this way with a high image quality, by simpler control, by using smaller capacity buffers, and at a lower cost can be provided.

Further, an image recording apparatus for recording the moving picture image signal encoded in this way can be provided.

Further, an image transmitting apparatus for transmitting the moving picture image signal encoded in this way can be provided.

Various further apsects and features of the present invention are defined in the appended claims. Combinations of features from the dependent claims may be combined with features of the independent claims as appropriate and not merely as explicitly set out in the claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

**Claims**

1. An image encoding apparatus comprising:

   a dividing means for dividing an input image signal to create N number of divided image signals;
   a bit rate assigning means for assigning a bit rate for each of said created N number of divided image signals so that a sum of the bit rates of said created N number of divided image signals reaches a predetermined value;
   an encoding means for encoding said created N number of divided image signals according to the assigned bit rates to create N number of video streams; and
   an integrating means for integrating said created N number of video streams to one video stream.

2. An image encoding apparatus as set forth in claim 1, wherein said encoding means has N number of encoding devices capable of operating in parallel for encoding said created N number of divided image signals according to the assigned bit rates to create the encoded video streams.

3. An image encoding apparatus as set forth in claim 2, further comprising N number of buffers having predetermined capacities for storing the video streams created at said N number of encoding devices.

4. An image encoding apparatus as set forth in claim 2, further comprising a buffer having a predetermined capacity for storing the video stream integrated by said integrating means.

5. An image encoding apparatus as set forth in claim 2, wherein each of said N number of encoding devices has a VBV (video buffering verifier) buffer, and the N number of encoding devices carry out said encoding based on occupancy rates of said VBV buffers.

6. An image encoding apparatus as set forth in claim 5, wherein said N number of encoding devices find maximum values of generated bits that do not cause underflow at said VBV buffers when encoding the next picture based on the assigned bit rates and carry out said encoding within a range of the maximum values.

7. An image encoding apparatus as set forth in claim 1, wherein each of said N number of encoding devices carries out said encoding within a range of a predetermined value sufficiently smaller than a maximum value of generated bits which does not cause underflow at its VBV buffer.

8. An image encoding apparatus as set forth in claim 7, wherein each of said N number of encoding devices finds maximum generated bits "b" by the following equation (1) and carries out said encoding within the range of the maximum generated bits "b".

$$b = (a+c)/2 \tag{1}$$

where,

"a" is a buffer occupancy rate increasing until immediately before the encoding of the next picture, and
"c" is the maximum value of the generated bits not causing the underflow of said VBV buffer.

9. An image encoding apparatus as set forth in claim 5, further comprising a VBV buffer occupancy rate controlling means for adjusting the occupancy rates of the VBV buffers of said N number of encoding devices to intended states.

10. An image encoding apparatus as set forth in claim 9, wherein said VBV buffer occupancy rate controlling means adjusts the occupancy rates of the VBV buffers of said N number of encoding devices so that intermediate values of the occupancy rates of the VBV buffers at the time of output of the video streams of the pictures become equal in the VBV buffers of said N number of encoding devices.

11. An image encoding apparatus as set forth in claim 2, wherein

said input image signal comprises an HDTV signal, and
said N number of encoding devices comprise SDTV signal encoding devices.

12. An image encoding apparatus as set forth in claim 2, wherein said bit rate assigning means finds a bit rate $R_{i,n+1}$ of an (n+1)th frame in an i-th (i = 1 to N) encoding device from the following equation (2) and assigns the same to the i-th said encoding device.

$$R_{i,n+1} = R \times X_{i,n}/\Sigma(X_{1,n} \text{ to } X_{N,n}) \tag{2}$$

where,

$X_{i,n} = S_{i,n} \times Q_{i,n}$,
$S_{i,n}$ is the generated code bits of a frame n in the i-th encoding device,
$Q_{i,n}$ is a mean quantization scale coda of the frame n in the i-th encoding device, and
R is a sum of the bit rates of said N number of divided image signals.

13. An image encoding method comprising the steps of:

dividing an input image signal to create N number of divided image signals,
assigning a bit rate for each of said created N number of divided image signals so that a sum of the bit rates of said created N number of divided image signals reaches a predetermined value,
encoding said created N number of divided image signals according to said assigned bit rates to create N number of video streams, and
integrating said created N number of video streams to one video stream.

**14.** An image encoding method as set forth in claim 13, wherein said encoding of said created N number of divided image signals are carried out by N number of encoding devices able to operate in parallel.

**15.** An image encoding method as set forth in claim 14, comprising the steps of:

temporarily storing said created N number of video streams by N number of buffers; and
reading said stored video streams and integrating them to a single video stream.

**16.** An image encoding method as set forth in claim 14, further comprising the steps of:

temporarily storing said integrated signal video stream in a buffer; and
successively outputting the stored video stream in accordance with request.

**17.** An image encoding method as set forth in claim 14, wherein said encoding is carried out based on a limit set in response to an occupancy rate of a VBV (video buffering verifier) buffer of a virtual decoder model.

**18.** An image encoding method as set forth in claim 17, further comprising a step of finding a maximum value of generated bits which does not cause underflow at said VBV buffer when encoding a next picture based on said assigned bit rate, and
wherein said encoding is carried out so that the generated bits shows a value within the range of the maximum value.

**19.** An image encoding method as set forth in claim 18, wherein said encoding is carried out so that the generated bits shows a value within a range of a predetermined value sufficiently smaller than the maximum value of the generated bits which does not cause underflow at said VBV buffer.

**20.** An image encoding method as set forth in claim 19, wherein said encoding is carried out so that the generated bits shows a value within a range of the bits "b" found by the following equation (3):

$$b = (a+c)/2 \hspace{3cm} (3)$$

where,

"a" is a buffer occupancy rate increasing until immediately before the encoding of the next picture, and
"c" is the maximum value of the generated bits not causing the underflow of said VBV buffer.

**21.** An image encoding method as set forth in claim 17, further comprising the step of adjusting the occupancy rate of each of said N number of VBV buffers to desired states, and
wherein said encoding is carried out based on a limit set in response to the adjusted occupancy rates of the VBV buffers.

**22.** An image encoding method as set forth in claim 21, wherein said adjusting the occupancy rates of the VBV buffers is carried out so that intermediate values of the occupancy rates of the VBV buffers at the time of output of the video streams of the individual pictures become equal at the VBV buffers of the N number of encoding devices.

**23.** An image encoding method as set forth in claim 14, wherein

said input image signal comprises an HDTV signal, and
said encoding comprises SDTV signal encoding.

24. An image encoding method as set forth in claim 14, wherein said assigning of the bit rates is carried out by finding a bit rate Ri,n+1 of an (n+1)th frame in an i-th (i = 1 to N) encoding device from the following equation (4) and assigning the same to the i-th said encoding device:

$$Ri,n+1 = R \times Xi,n/\Sigma(X1,n \text{ to } XN,n) \tag{4}$$

where,

Xi,n = Si,n x Qi,n,
Si,n is the generated code bits of a frame n in the i-th encoding device,
Qi,n is a mean quantization scale code of the frame n in the i-th encoding device, and
R is a sum of the bit rates of said N number of divided image signals.

25. An image decoding apparatus, comprising:

a demultiplexing means for receiving a video stream of a predetermined bit rate obtained by dividing a single image signal into N number of divided image signals, encoding them with variable bit rates, and integrating the created N number of video streams and for demultiplexing the input video stream to N number of video streams;
a decoding means for decoding each of said demultiplexed N number of video streams to create N number of image signals; and
a combining means for combining said created N number of image signals to one image signal.

26. An image decoding apparatus as set forth in claim 25, wherein said decoding means has N number of decoding devices able to operate in parallel for decoding said demultiplexed N number of video streams to generate image signals.

27. An image decoding apparatus as set forth in claim 26, further comprising a buffer for storing said input video stream, and
wherein said demultiplexing means successively demultiplexing said video stream stored in said buffer into N number of video streams.

28. An image decoding apparatus as set forth in claim 26, further comprising N number of buffers of predetermined capacities for storing the demultiplexed N number of video streams, and wherein
said decoding means decoding said N number of video streams stored in corresponding buffers to create image signals.

29. An image decoding apparatus as set forth in claim 26, wherein

said N number of decoding devices comprise SDTV signal decoding devices, and
said combined image signal comprises an HDTV signal.

30. An image decoding method, comprising the steps of:

receiving as input a video stream of a predetermined bit rate obtained by dividing a single image signal into N number of divided image signals, encoding them with variable bit rates, and integrating the created N number of video streams and for demultiplexing the related input video stream to N number of video streams;
decoding each of said demultiplexed N number of video streams to create N number of image signals; and
combining said created N number of image signals to one image signal.

31. An image decoding method as set forth in claim 30, wherein said decoding is carried out by N number of decoding devices able to operate in parallel for decoding said demultiplexed N number of video streams to create image signals.

32. An image decoding method as set forth in claim 31, wherein

said N number of decoding devices comprise SDTV signal decoding devices and

said combined image signal comprises an HDTV signal.

33. An image recording apparatus, comprising:

a dividing means for dividing an input image signal to create N number of divided image signals;
a bit rate assigning means for assigning a bit rate for each of said created N number of divided image signals so that the sum of the bit rates of said created N number of divided image signals reaches a predetermined value;
an encoding means for encoding said created N number of divided image signals according to the assigned bit rates to create N number of video streams;
an integrating means for integrating said created N number of video streams to one video stream; and
a recording means for recording said integrated video stream on a recording medium.

34. An image transmitting apparatus, comprising:

a dividing means for dividing an input image signal to create N number of divided image signals;
a bit rate assigning means for assigning a bit rate for each of said created N number of divided image signals so that the sum of the bit rates of said created N number of divided image signals reaches a predetermined value;
an encoding means for encoding said created N number of divided image signals according to the assigned bit rates to create N number of video streams;
an integrating means for integrating said created N number of video streams to one video stream; and
a transmitting means for transmitting said integrated video stream.

# FIG.1

# FIG.2

EP 1 143 736 A2

# FIG.3

| A1 | B1 |
|---|---|
| A2 | B2 |
| ⋮ | ⋮ |
| A34 | B34 |
| C1 | D1 |
| C2 | D2 |
| ⋮ | ⋮ |
| C34 | D34 |

# FIG.4

BUFFER
OCCUPANCY
RATE

A

B

C

D

TIME

EP 1 143 736 A2

FIG.5

# FIG.6

ACTUAL
TRANSMISSION
SEQUENCE

R | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23

A B C D

TIME

EP 1 143 736 A2

EP 1 143 736 A2

# FIG.7

CONTROL DEVICE

201

270

26

# FIG.8

# FIG.9

# FIG.10

## FIG.11

110
120-1
160

DIVIDED IMAGE
ENCODING DEVICE A

(OUTPUT BIT RATE)

PROCESSOR → BUFFER

$R_{max}$ or 0

CONTROL SIGNAL
130-1
150-1

GENERATED CODE BITS, MEAN Q SCALE CODE

ASSIGNED BIT RATE

$S_{a, n}, Q_{a, n}$
120-2
$R_{a, n+1}$

DIVIDED IMAGE
ENCODING DEVICE B

PROCESSOR → BUFFER

$R_{max}$ or 0

130-2 150-2

IMAGE DEVIDING DEVICE

$S_{b, n}, Q_{b, n}$
120-3
$R_{b, n+1}$

DIVIDED IMAGE
ENCODING DEVICE C

PROCESSOR → BUFFER

$R_{max}$ or 0

130-3 150-3

VIDEO STREAM INTEGRATION DEVICE

190
300

EXTERNAL BUFFER

R

$S_{c, n}, Q_{c, n}$
120-4
$R_{c, n+1}$

DIVIDED IMAGE
ENCODING DEVICE D

PROCESSOR → BUFFER

$R_{max}$ or 0

130-4 150-4

$S_{d, n}, Q_{d, n}$
$R_{d, n+1}$

171

ASSIGNED BIT RATE PROCESSING UNIT

CONTROL UNIT

CONTROL DEVICE

170

172

103

# FIG.12

EP 1 143 736 A2

# FIG.13

EASY TO COMPRESS
IMAGE

DIFFICULT TO
COMPRESS IMAGE

DELAY

BIT RATE : SMALL

BIT RATE : LARGE

VBV BUFFER

DETERIORATION OF
IMAGE QUALITY

FIG.14A

FORCIBLE GENERATION

FIG.14B

A

B

C

D

RESTRICTION OF GENERATION

# FIG.15

FIG.16

## FIG.17

VBV BUFFER OF DIVIDED IMAGE ENCODING DEVICE A

VBV BUFFER OF DIVIDED IMAGE ENCODING DEVICE B

VBV BUFFER OF DIVIDED IMAGE ENCODING DEVICE C

VBV BUFFER OF DIVIDED IMAGE ENCODING DEVICE D